# EUROPEAN PATENT SPECIFICATION

(11) **EP 0 356 217 B1**
(45) Date of publication and mention of the grant of the patent: **22.06.1994**
(21) Application number: 89308539.9
(22) Date of filing: 23.08.1989
(51) Int. Cl.: B23Q 7/10

(54) **A table to secure a pallet to support a workpiece on a machine tool**
Tisch zum Befestigen einer Palette, um ein Werkstück in einer Werkzeugmaschine zu halten
Table pour fixer une palette support de pièce sur une machine-outil

(30) Priority: 23.08.1988 JP 209170/88
(43) Date of publication of application: 28.02.1990
(73) Proprietor: KABUSHIKI KAISHA MORI SEIKI SEISAKUSHO, Yamatokoriyamashi Nara (JP)
(72) Inventor: Maeda, Norihide, Kashiharashi Nara (JP); Okahashi, Hideki, Ikomagun Nara (JP)
(74) Representative: Purvis, William Michael Cameron

(56) References cited:
- EP-A- 0 291 482
- DE-A- 3 022 651
- DE-A- 3 621 798
- GB-A- 954 449
- GB-A- 2 163 979
- US-A- 4 032 163
- US-A- 4 662 043

## Description

The invention relates generally to a table for use in association with machine tools, and more particularly to a table releasably to secure an automatic pallet supporting a workpiece on a machine tool.

Tables have been previously proposed which clamp a pallet under hydraulic pressure. The employment of hydraulic pressure requires a hydraulic system. However, hydraulic systems have some disadvantages; one is that the size of the machine as a whole is increased. Another is that if a larger force acts on the pallet beyond the hydraulic clamping force, the pallet is likely to "float" or move.

It is known from GB-A-2163979 to produce such a table for securing a pallet to support a workpiece on a machine tool, the table comprising a spindle movable up and down, drive means to move the spindle in a vertical direction, a pair of retainers attached at an upper end of the spindle, a plurality of clamp arms arranged radially of the spindle, a clamp pawl formed integrally with an outer end of each clamp arm, with the clamp pawl being movable up and down and radially of the spindle, and a connecting member interposed between each clamp arm and an associated retainer. However, the arrangement of GB-A-2163979 relies on the presence of a pair of resiliently compressible washers to produce the clamping force. The clamping arms act on a pin which in turn acts on the washers. Since the clamping arms do not act directly on the washers or any other members which engage the pallet, there is a danger of forces produced in the pallet overcoming the clamping force which is occasioned primarily by the resistance of the washers.

According to the invention, there is provided a table to secure a pallet to support a workpiece on a machine tool, the table comprising a spindle movable up and down, drive means to move the spindle in a vertical direction, a pair of retainers attached at an upper end of the spindle, a plurality of clamp arms arranged radially of the spindle, a clamp pawl formed integrally with an outer end of each clamp arm, with the clamp pawl being movable up and down and radially of the spindle, and a connecting member interposed between each clamp arm and an associated retainer, characterised in that each connecting member has an end projection rotatably connected to an engaging recess of an associated clamp arm, and has a further end projection rotatably connected to an engaging recess of said associated retainer and in that the connecting members are such that they urge the associated clamp arms to move outwardly and upwardly to lock their clamp pawls at positions to clamp the pallet on the ascent of the spindle to cause the retainers to drive the connecting members, descent of the spindle causing the retainers to retract the connecting members so that they urge the associated clamp arms to move inwardly and downwardly to return the clamp pawls to their original positions to unclamp the pallet.

The invention is diagrammatically illustrated by way of example in the accompanying drawings, in which:-
Figure 1 is a cross-sectional front view showing a table according to the invention with a pallet clamped by the table;
Figure 2 is a cross-sectional front view showing the table of Figure 1 with the clamping pressure released;
Figure 3 is a cross-sectional front view showing the table of Figure 1 in its unclamped state;
Figure 4 is a cross-sectional view taken on line 4-4 in Figure 1;
Figure 5 is a cross-sectional view taken on line 5-5 in Figure 4;
Figure 6 is a perspective view showing a pallet clamping ring of the table of Figure 1;
Figure 7 is a perspective view showing a sector-shaped member of the table of Figure 1;
Figure 8 is a perspective view showing an unclamping pin of the table of Figure 1;
Figure 9 is a perspective view showing an arm pressing block of the table of Figure 1;
Figure 10 is a perspective view showing a clamping arm of the table of Figure 1; and
Figure 11 is a perspective view showing a connecting member of the table of Figure 1.

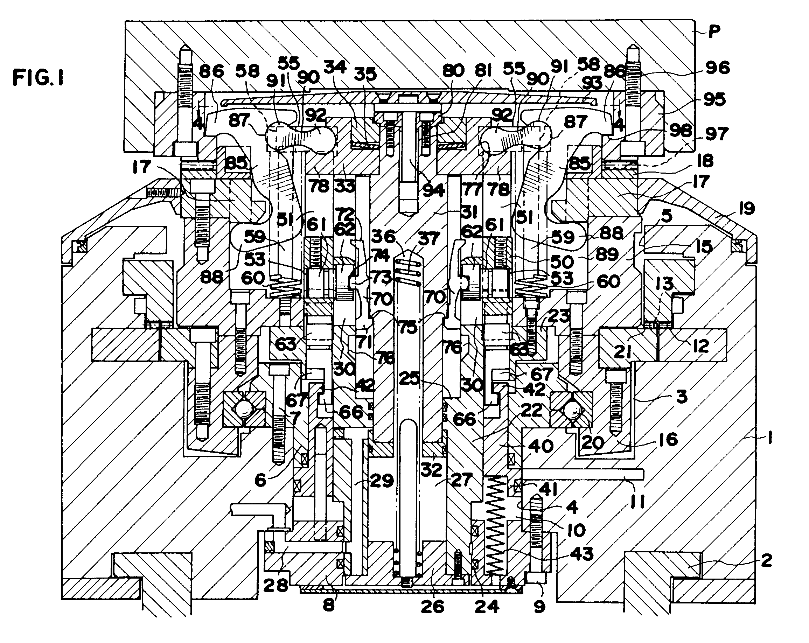

Referring to Figure 1, a table 1 is placed on a bed of a machine tool such as a machining centre such that the table 1 can move along guide rails 2 in a direction perpendicular to the plane of the paper of the drawing.

The table 1 includes a space 3 to accommodate a clamp portion of a pallet P. The space 3 includes a lower opening 4 lined with a cylindrical wall member 6 clamped by bolts 7, and surrounded by a bottom plate 8 secured by bolts 9. A hydraulic chamber 10 is formed between the wall member 6 and the bottom plate 8. The hydraulic chamber 10 is supplied with fluid through a path 11.

The space 3 is also provided with an index coupling 12 on its inside wall, and a vertically movable coupling 13 is disposed in such a manner as to be engageable with the stationary index coupling 12. The movable coupling 13 can be moved by a drive means (not shown) disposed adjacent an upper opening 5 of the table 1.

A pallet base 15 is provided with a support block 16 in its lower section and a flange 17 in its upper section to support a clamping arm described below. The flange 17 is provided with face couplings 18 arranged in a circle on its top surface toward the pallet P. A cover 19 covers the upper opening 5 of the table 1.

The support block 16 of the pallet base 15 is rotatable around the axis of the table 1 through bearings 20, and an index coupling 21 is fixed to the support block 16. The movable coupling 13 is engaged with the index coupling 21 and the index coupling 12 of the table 1, thereby enabling the pallet base 15 to be held fast at a desired indexed position.

A hydraulic cylinder 22 has a flange portion 23 bolted to the bottom of the pallet base 15 with its lower end extending through the bottom plate 8 of the table 1 and with its lower periphery sealed against the inside wall of the bottom plate 8 through a seal ring 24.

The hydraulic cylinder 22 includes an annular step 25, and a hydraulic chamber 27 between the annular step 25 and a bottom member 26, the hydraulic chamber 27 being supplied with fluid through paths 28 and 29.

The hydraulic cylinder 22 includes slots 30 in its upper section, the slots 30 being diametrically opposed to each other and axially extending.

A spindle 31 is movably inserted in the hydraulic cylinder 22 in contact with the inside wall of the ring-shaped step 25. The spindle 31 is fitted with another spindle 32 which moves in the hydraulic chamber 27.

The spindle 31 has a pair of blocks 33, 34 mounted thereon separated by springs 35. The structure and function of the blocks 33, 34 will be described below:
The spindle 31 includes a bore 36 in which a spring 37 is inserted to urge the spindle 31 upward from its support by the bottom plate 26.

A cylindrical piston 40 is fitted around a lower part of the hydraulic cylinder 22 so as to release the clamping pressure. The piston 40 includes a lower portion 41 and an upper ring-shaped shoulder 42. The lower portion 41 moves in the hydraulic chamber 10. The piston 40 is normally biased upward by a spring 43 disposed between the lower portion 41 and the bottom plate 8.

A pallet clamping ring 50 of cylindrical form is fitted around an upper part of the cylinder 22 above its flange portion 23.

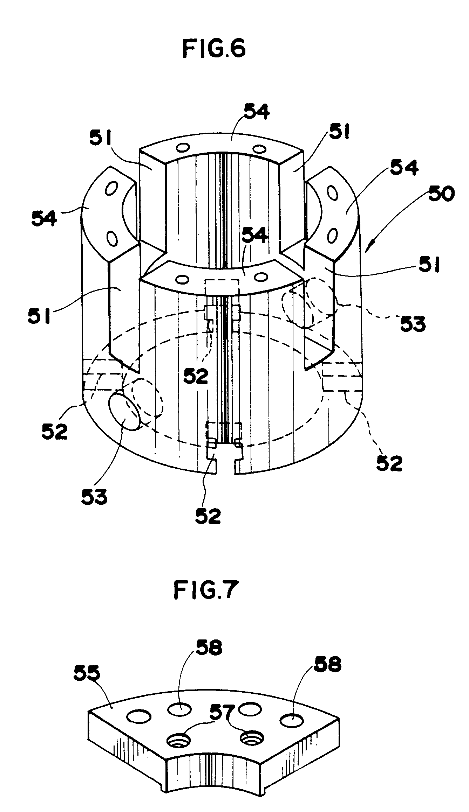

The clamping ring 50, as shown in Figure 6, includes four slots 51 cut downward from its rim, the four slots 51 being spaced at angular intervals of 90°, and four T-shaped grooves 52 which are also spaced at angular intervals of 90°. The T-shaped grooves 52 are each positioned between a respective adjacent pair of the slots 51. A pair of holes 53 is provided diametrically located, below two of the slots 51. The holes 53 allow pins 61 to pass through.

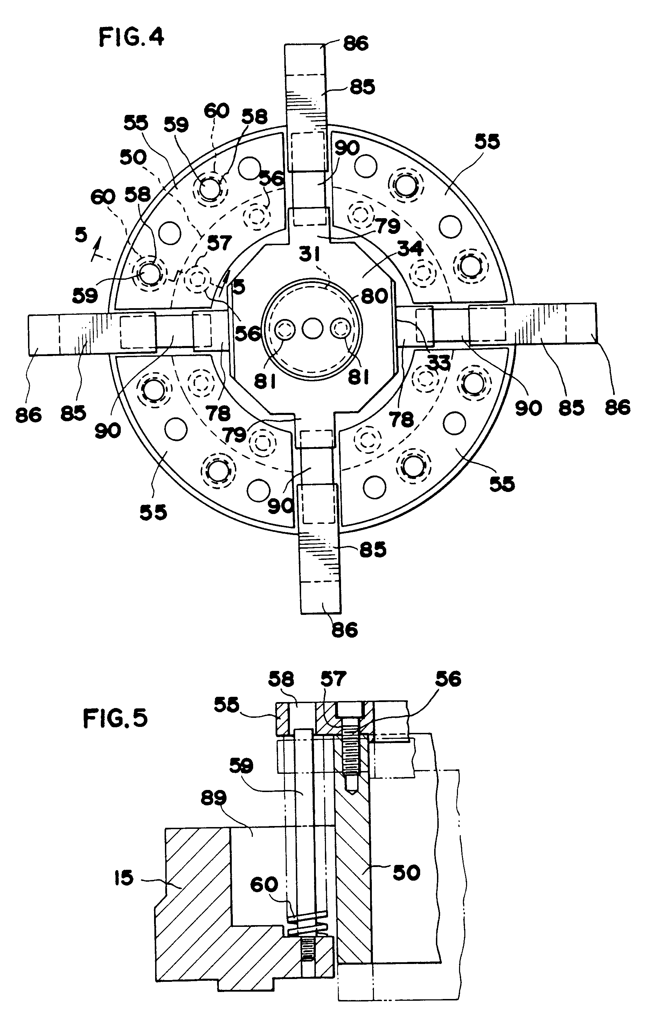

In this way the clamping ring 50 is notionally split into four wall components 54 between each adjacent pair of the slots 51. Each wall component 54 is provided with a sector-shaped member 55 shown in Figure 7 fixed by means of bolts 56, as shown in Figure 4 and 5.

Each sector-shaped member 55 includes holes 58 to allow guide posts 59 to pass therethrough and threaded holes 57 to receive the fastening bolts 56.

The clamping ring 50 equipped with the sector-shaped members 55 is slidably fitted around the hydraulic cylinder 22. As best shown in Figure 5, the spring guide posts 59 are erected on the bottom of the pallet base 15 and pass through the holes 58. The clamping ring 50 is biased upward by springs 60 located on the spring guide posts 59.

The pins 61 pass through the holes 53 such that heads 62 thereof protrude inside the clamping ring 50 and engage in the slots 30 of the hydraulic cylinder 22. In this way the clamping ring 50 is allowed to move vertically within the range limited by the slots 30.

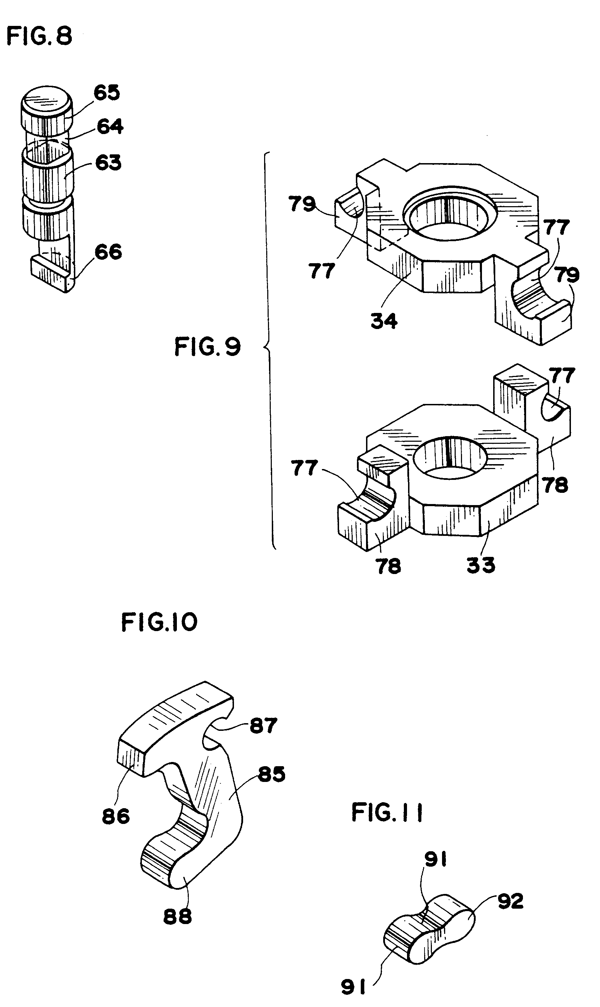

An unclamping pin 63 is fixed to a lower part of the clamping ring 50. As shown in Figure 8, the unclamping pin 63 includes a head 65, a neck 64 and a leg 66. Each unclamping pin 63 is fixed to the clamping ring 50 by inserting the head 65 and the neck 64 in one of the T-shaped grooves 52 (Figure 6). Each clamping pin 63 passes through a hole 67 in the cylinder 22 and extends downwardly until its leg 66 engages the upper annular shoulder 42 of the piston 40.

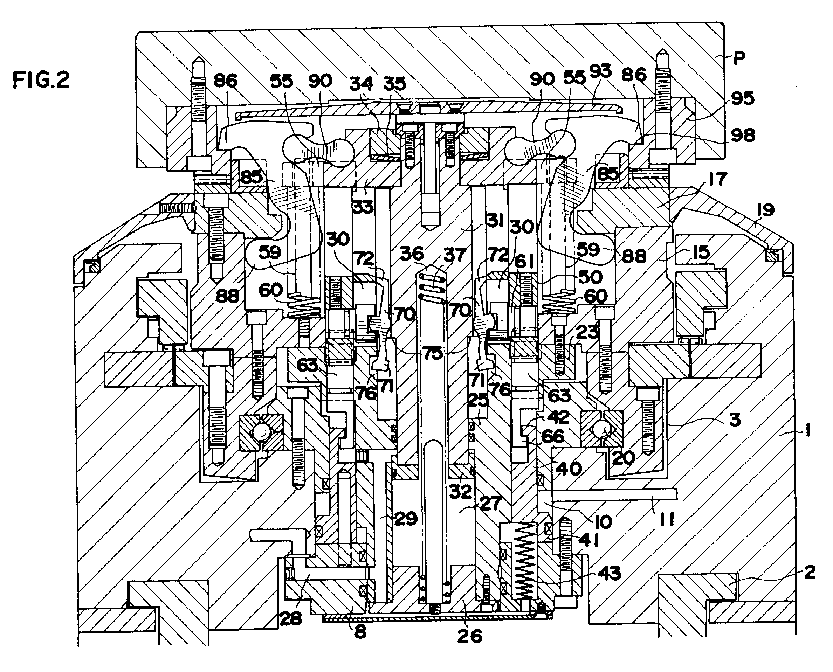

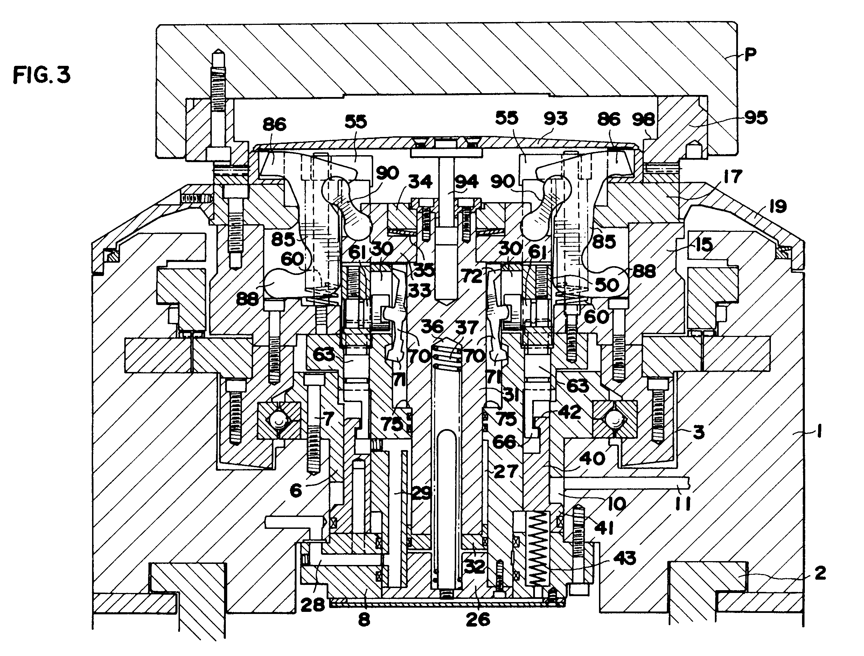

A movable engager 70 includes pawls 71 and 72 at opposite ends and a pivotal dowel 73 at its centre. The dowel 73 engages in a recess 74 in the head 62 of the pin 61 so that the engager 70 can oscillate about the dowel 73. When the clamping ring 50 is at a higher position, as shown in Figure 1, the lower pawl 71 is engaged with a step 75 on the outside wall of the spindle 31. When the clamping ring 50 is at a lower position, as shown in Figures 2 and 3, the upper pawl 72 comes into abutment with a slanted surface of the hydraulic cylinder 22, and is displaced inwardly. As a result, the lower pawl 71 is displaced outwardly and accommodated in a recess 76 in the inside wall of the hydraulic cylinder 22.

The blocks 33, 34 are each shaped in the form of eight-sided figure as shown in Figure 9, and respectively include horn members 78 and 79 diametrically arranged. Each horn member 78, 79 includes a semi-circular recess 77. Though the two blocks 33 and 34 are of similar form, they are different in their fixing position with respect to the respective body portions such that when the blocks 33 and 34 are joined face to face, the horn members 78 and 79 are in the same plane and angularly spaced by 90°. The facially joined blocks 33, 34 are fixed on the top end of the spindle 31 and separated by the spring 35. The blocks 33 and 34 are maintained by bolts 81 through a presser plate 80 in such a manner as to be movable under the action of the spring 35. The movability of the blocks 33, 34 equalizes the clamping pressure by a plurality of clamp arms 85, which will be hereinafter described in greater detail. The pressure of the spring 35 is arranged to be smaller than that of the springs 60 which urge the clamping ring 50 upward.

As shown in Figure 10 each clamp arm 85 is generally of the form of a letter J, and includes a hook-like clamping pawl 86, an engaging recess 87 at the back of the pawl 86, and an engager 88.

The clamp arms 85 are accommodated in an annular recess 89 formed between the pallet base 15 and the clamping ring 50, and located at places corresponding to the horn members 78 and 79. Each clamp arm 85 is supported by the sector-shaped members 55 at both sides and its engager 88 is held in engagement with the flange 17.

Each clamp arm 85 and the respective horn member 78 or 79 are connected by a connecting member 90 which includes end projections 91 and 92 of a semi-circular cross-section. The projection 91 is engaged with the recess 87 of the clamp arm 85, and the other projection 92 is engaged with the recess 77 of the horn member 78 or 79. In this way the clamp arms 85 are rotatably connected to the blocks 33, 34 through the connecting members 90. In the clamping condition shown in Figure 1 the connecting member 90 prevents the clamp arms 85 from moving to the unclamping position, and locks the clamp arms 85 to the clamping positions.

The clamp unit is covered by a cover 93 which is supported by a vertically movable pin 94 and wholly covers the pallet base 15 in the unclamping condition.

The pallet P is fastened by a fastening ring 95 which is fixed to the bottom plate of the pallet P by bolts 96 and is provided with face couplings 97 engageable with the face couplings 18 of the pallet base 15. The fastening ring 95 is also provided with an annular step 98.

The table 1 is operated as follows:
In the position of Figure 1 the pallet P placed on the pallet base 15 is prevented from turning because of its coupling 97 being engaged with the face coupling 18. At this stage the pallet P is clamped by the pawls 86 of the clamp arms 85 which are engaged with the step 98. At a position where the pallet P is clamped the clamp arms 85 are maintained by the connecting members 90 which are biased upward by the springs 37 and 60. While the clamp arms 85 are maintained at the clamping position, a strong clamping force is imparted to the arms 85 to guarantee that the pallet P retains its clamped state irrespective of an unexpected external force.

When the clamped pallet P is to be released or unclamped, the clamping force imparted by the springs 60 is released.

Fluid is introduced into the hydraulic chamber 10 through the path 11 from a source (not shown), whereby the piston 40 is forced downward against the force of the spring 43. In accordance with the downward movement of the piston 40 the unclamping pins 63 and the pallet clamp ring 50 are caused to descend against the force of the springs 60. The descent of the clamp ring 50 causes the movable engagers 70 to descend due to the pins 60, thereby releasing the lower pawls 71 from the step 75 of the spindle 31, and bringing the upper pawls 72 into abutment with an upper slanted part of the cylinder 22. In this way the upper pawls 72 are displaced inwardly whereas the lower pawls 71 are displaced outwardly and accommodated in the recess 76. When the pawls 71 of the movable engagers 70 are disengaged from the step 75 of the spindle 31, the spindle 31 is released from the force provided by the springs 60, and the clamping force on the clamp arms 85 is also lost but they retain their clamping position under the action of the spring 37. This is the position shown in Figure 2.

Then, fluid is introduced into the hydraulic chamber 27 through the paths 28, 29, and as shown in Figure 3, the table spindle 31 is caused to descend against the spring 37. In accordance with the descent of the spindle 31 the blocks 33 and 34 descend, thereby causing the connecting members 90 to descend. In this way the clamp arms 85 are drawn radially inwardly, thereby enabling the pawls 86 to move to the unclamping position where they are separated from the step 98 of the pallet P. The pallet P is thus freed for repositioning.

At the unclamping position the cover 93 closes the opening of the pallet base 15. As the repositioning or replacement of the pallet P takes place, the cover 93 and the cover 19 prevent cutting chips and used oil from intruding into the inside of the table 1.

When a fresh pallet P is to be clamped, the procedure is followed in reverse. First, the oil in the hydraulic chamber 27 is discharged, thereby allowing the spindle 31 to rise up due to the spring 37, and moving the clamp arms 85 to the clamping positions. Then, the fluid in the chamber 10 is discharged, thereby allowing the piston 40 to return to the position shown in Figure 1 due to the spring 43. Simultaneously, the clamping pin 50 and the unclamping pin 63 are raised to the position shown in Figure 1 by the spring 60 through the sector-shaped members 55. As they rise, the lower pawls 71 of the movable engagers 70 are engaged with the step 75 of the spindle 31. In this way the raising force is imparted to the spindle 31. The raising force is transmitted to the clamp arms 85 through the blocks 33, 34 and the connecting members 90. Thus the pawls 86 have their clamping force restored.

## Claims

1. A table to secure a pallet to support a workpiece on a machine tool, the table (1) comprising a spindle (31) movable up and down, drive means to move the spindle in a vertical direction, a pair of retainers (33, 34) attached at an upper end of the spindle, a plurality of clamp arms (85) arranged radially of the spindle (31), a clamp pawl (86) formed integrally with an outer end of each clamp arm (85), with the clamp pawl (86) being movable up and down and radially of the spindle (31), and a connecting member (90) interposed between each clamp arm (85) and an associated retainer (33, 34) characterised in that each connecting member (90) has an end projection (91) rotatably connected to an engaging recess (87) of an associated clamp arm (85), and has a further end projection (92) rotatably connected to an engaging recess (77) of said associated retainer (33, 34); and in that the connecting members (90) are such that they urge the associated clamp arms (85) to move outwardly and upwardly to lock their clamp pawls (86) at positions to clamp the pallet (P) on the ascent of the spindle (31) to cause the retainers (33, 34) to drive the connecting members (90), descent of the spindle causing the retainers (33, 34) to retract the connecting members (90) so that they urge the associated clamp arms (85) to move inwardly and downwardly to return the clamp pawls (86) to their original positions to unclamp the pallet (P).

2. A table according to claim 1, wherein the arm operating means comprises springs (37, 60) to raise the spindle (31) upward, and hydraulic means to force down the spindle (31) against the springs.

3. A table according to claim 2, wherein the springs (37, 60) comprise a first spring (37) to raise the clamp arms (85) to a position where the pallet (P) is clamped, and a second spring (60) to impart a clamping force to the clamp arms positioned at the clamping position, and wherein the hydraulic means comprises a first hydraulic means to force down the spindle against the first spring (37), and second hydraulic means to cause the second spring to release the clamping force upon the clamp arms.

4. A table according to any one of claims 1 to 3, including a cover (93) placed above the spindle (31), thereby covering the table (1) so as to protect the clamping unit against dust and oil when the spindle (31) descends.

## Patentansprüche

1. Tisch zum Befestigen einer Palette, um ein Werkstück auf einer Werkzeugmaschine zu halten, wobei der Tisch (1) eine auf- und abbewegliche Spindel (31), Antriebseinrichtungen, um die Spindel in einer vertikalen Richtung zu bewegen, ein Paar Von Haltem (33, 34), die an einem oberen Ende der Spindel angebracht sind, eine Vielzahl von Klemmarmen (85), die radial von der Spindel (31) angeordnet sind, eine Klemmklinke (86), die einstückig mit einem äußeren Ende jedes Klemmarmes (85) gebildet ist, wobei die Klemmklinke (86) auf und ab und radial von der Spindel (31) bewegbar ist, und ein Verbindungsteil (90) welches zwischen jedem Klemmarm (85) und einem zugeordneten Halter (33, 34) angebracht ist, aufweist, dadurch gekennzeichnet, daß jedes Verbindungsteil (90) eine Endverlängerung (91) hat, die drehbar mit einer in Eingriff kommenden Ausnehmung Teil (87) eines zugeordneten Klemmarmes (85) verbunden ist, und eine weitere Endverlängerung (92) hat, die drehbar mit einer in Eingriff kommenden Ausnehmung (77) des zugeordneten Halters (33, 34) verbunden ist; und daß die Verbindungsteile (90) derart sind, daß sie die zugeordneten Klemmarme (85) unbedingt dazu bringen, sich nach außen und nach oben zu bewegen, um ihre Klemmklinken (86) bei Positionen festzustellen, um die Palette (P) auf dem Anstieg der Spindel (31) zu klemmen, um die Halter (33, 34) zu veranlassen, die Verbindungsglieder (90) anzutreiben, wobei der Abstieg der Spindel die Halter (33, 34) veranlaßt, die Verbindungsteile (90) zurückzuziehen, so daß sie die zugeordneten Klemmarme (85) dazu bringen, sich nach innen und nach unten zu bewegen, um die Klemmklinken (86) in ihre ursprünglichen Positionen zu bringen, um die Palette (P) zu lösen.

2. Tisch nach Anspruch 1, wobei die Armbetätigungseinrichtungen Federn (37, 60), um die Spindel (31) nach oben zu heben, und hydraulische Mittel, um die Spindel (31) nach unten gegen die Federn zu zwingen, aufweisen.

3. Tisch nach Anspruch 2, wobei die Federn (37, 60) eine erste Feder (37) um die Klemmarme (85) in eine Position zu heben, in der die Palette (P) geklemmt ist, und eine zweite Feder (60) aufweisen, um den Klemmarmen, die in Klemmlage positioniert sind, eine Klemmkraft zu erteilen, und die hydraulischen Mittel ein erstes hydraulisches Mittel aufweisen, um die Spindel nach unten gegen die erste Feder (37) zu zwingen, und ein zweites hydraulisches Mittel, um die zweite Feder zu veranlassen, die Klemmkraft auf die Klemmarme zu lösen.

4. Tisch nach einem der Ansprüche 1 bis 3, mit einer Abdeckung (93), die über der Spindel (31) angeordnet ist, wodurch der Tisch (1) abgedeckt wird, um die Klemmeinheit gegen Staub und Öl zu schützen, wenn die Spindel (31) abwärts fährt.

## Revendications

1. Table pour fixer une palette de support de pièce sur une machine-outil, la table (1) comprenant une broche (31) mobile vers le haut et vers le bas, un moyen d'entraînement pour déplacer la broche dans une direction verticale, une paire d'éléments de retenue (33, 34) fixés à une extrémité supérieure de la broche, une pluralité de bras de serrage (85) disposés radialement par rapport à la broche (31), un cliquet de serrage (86) formé d'un seul tenant avec une extrémité externe de chaque bras de serrage (85), avec le cliquet de serrage (86) étant mobile vers le haut et vers le bas et radialement par rapport à la broche (31), et un élément de connexion (90) disposé entre chaque bras de serrage (85) et un élément de retenue associé (33, 34) caractérisée en ce que chaque élément de connexion (90) comporte une projection d'extrémité (91) reliée de manière à tourner à un évidement d'engagement (87) d'un bras de serrage associé (85), et comporte une autre projection d'extrémité (92) reliée de manière à tourner à un évidement d'engagement (77) dudit élément de retenue associé (33, 34); et en ce que les éléments de connexion (90) sont tels qu'ils sollicitent les bras de serrage associés (85) pour qu'ils se déplacent vers l'extérieur et vers le haut afin de verrouiller leurs cliquets de serrage (86) en des positions de manière à serrer la palette (P) lors de la montée de la broche (31) afin d'amener les éléments de retenue (33, 34) à entraîner les éléments de connexion (90), la descente de la broche amenant les éléments de retenue (33, 34) à rétracter les éléments de connexion (90) de manière qu'ils sollicitent les bras de serrage associés (85) pour qu'ils se déplacent vers l'intérieur et vers le bas afin de ramener les cliquets de serrage (86) en leurs positions originales de manière à desserrer la palette (P).

2. Table selon la revendication 1, dans laquelle le moyen d'actionnement de bras comprend des ressorts (37, 60) pour lever la broche (31) vers le haut, et un moyen hydraulique pour faire descendre de force la broche (31) à l'encontre des ressorts.

3. Table selon la revendication 2, dans laquelle les ressorts (37, 60) consistent en un premier ressort (37) pour lever les bras de serrage (85) jusqu'à une position où la palette (P) est serrée, et un second ressort (60) pour donner une force de serrage aux bras de serrage dans la position de serrage, et dans laquelle le moyen hydraulique consiste en un premier moyen hydraulique pour faire descendre de force la broche à l'encontre du premier ressort (37), et un second moyen hydraulique pour amener le second ressort à supprimer la force de serrage sur les bras de serrage.

4. Table selon l'une quelconque des revendications 1 à 3, comprenant un couvercle (93) placé au-dessus de la broche (31), de manière à recouvrir la table (1) afin de protéger l'unité de serrage contre la poussière et l'huile lorsque la broche (31) descend.
